# EUROPEAN PATENT SPECIFICATION

(11) **EP 4 287 360 B1**
(45) Date of publication and mention of the grant of the patent: **17.12.2025**
(21) Application number: 22842520.3
(22) Date of filing: 15.07.2022
(51) Int. Cl.: H01M 10/6551, H01M 10/653, H01M 10/647, H01M 10/613, H01M 10/625, H01M 50/242, H01M 50/249, H01M 50/211, H01M 10/0525

(54) **BATTERY MODULE, BATTERY PACK COMPRISING BATTERY MODULE, AND VEHICLE COMPRISING BATTERY PACK**
BATTERIEMODUL, BATTERIEPACK MIT DEM BATTERIEMODUL UND FAHRZEUG MIT DEM BATTERIEPACK
MODULE DE BATTERIE, BLOC-BATTERIE COMPRENANT UN MODULE DE BATTERIE ET VÉHICULE COMPRENANT UN BLOC-BATTERIE

(30) Priority: 16.07.2021 KR 20210093808
(43) Date of publication of application: 06.12.2023
(73) Proprietor: LG Energy Solution, Ltd., Seoul 07335 (KR)
(72) Inventor: CHUNG, Won-Sik, Daejeon 34122 (KR); YU, Sung-Chun, Daejeon 34122 (KR); KIM, Min-Sung, Daejeon 34122 (KR)
(74) Representative: Plasseraud IP
(86) International application number: PCT/KR2022/010391
(87) International publication number: WO 2023/287258

(56) References cited:
- EP-A2- 2 461 416
- JP-A- 2009 252 501
- JP-A- 2018 060 595
- KR-A- 20160 066 862
- KR-A- 20170 132 514
- KR-B1- 102 173 142
- US-A1- 2012 107 649
- US-A1- 2020 052 256

## Description

### TECHNICAL FIELD

The present application claims priority to Korean Patent Application No. 10-2021-0093808 filed on July 16, 2021 in the Republic of Korea.

The present disclosure relates to a battery module, a battery pack including the battery module, and a vehicle including the battery pack.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

When a battery pack is configured by connecting a plurality of battery cells in series and/or in parallel, a method of first configuring a battery module including at least one battery cell and adding other elements by using the at least one battery module to configure a battery pack or a battery rack is general.

A conventional battery module generally includes a plurality of battery cells and a module housing in which the plurality of battery cells are accommodated. Because the battery module is manufactured such that the plurality of battery cells are densely packed in a narrow space, it is important to easily dissipate heat generated in each secondary battery.

In this regard, as one of various methods of dissipating heat generated in a plurality of battery cells, an indirect cooling method of cooling the plurality of battery cells is mainly applied to a battery module. An indirect cooling method is a method of cooling a battery cell through a cooling fin contacting a packaging material of the battery cell. In the indirect cooling method, the cooling fin transfers heat generated in the battery cell to a cooling medium. In general, a heat sink is formed over or under the cooling fin to rapidly exchange heat with the cooling medium.

The cooling fin is generally formed of a metal with high thermal conductivity. Also, in order to efficiently transfer heat, the cooling fin more protrudes toward a module housing than the battery cell.

In general, the module housing is also formed of a metal material. The cooling fin may come into contact with an inner surface of the module housing due to swelling caused by abnormality of the battery cell or impact from the outside of the module housing. In this case, a short circuit may occur when the cooling fin that is a metal member contacts the inner surface of the module housing, thereby leading to a failure of a battery module.

Hence, there is a demand to provide a battery module in which insulation performance of a cooling fin may be ensured, and a battery pack and a vehicle including the battery module.

Document US 2020/052256 A1 describes a battery module comprising a plurality of battery cells, a module housing in which the plurality of battery cells is accommodated and at least one cooling fin located between the plurality of battery cells in the module housing said cooling fin comprising an insulating cap for preventing direct contact with the module housing.

### DISCLOSURE

### Technical Problem

The present disclosure is designed to solve the problems of the related art, and therefore the present disclosure is directed to providing a battery module having a structure in which insulation performance may be ensured even when a cooling fin comes into contact with an inner surface of a module housing due to swelling caused by abnormality of a battery cell or impact from the outside of the module housing, and a battery pack and a vehicle including the battery module.

However, the technical purpose to be solved by the present disclosure are not limited to the above, and other objects not mentioned herein will be clearly understood by one of ordinary skill in the art from the following disclosure.

### Technical Solution

In one aspect of the present disclosure, there is provided a battery module according to claim 1.

In realization modes:
The insulating cap may surround the at least an end portion of the fin body.

A coupling end having a loop shape may be provided on the at least an end portion of the fin body, and a coupling hook having a shape complementary to the loop shape of the coupling end may be provided on the insulating cap.

The battery module may further include a heat dissipating resin provided in the module housing and contacting the at least one cooling fin, wherein the insulating cap is inserted into the heat dissipating resin.

The heat dissipating resin may be coated to a certain height on an inner surface of the module housing.

At least a part of each of the plurality of battery cells may be inserted into the heat dissipating resin.

The at least an end portion of the fin body may have an uneven shape in which at least one convex portion and at least one concave portion are alternately arranged in a direction parallel to a longitudinal direction of each of the plurality of battery cells, wherein the insulating cap is coupled to the at least one convex portion.

The plurality of battery cells may be pouch-type cells, and may each include a receiving portion in which an electrode assembly is accommodated, a sealing portion formed around the receiving portion, and an electrode lead extending to outside of the sealing portion and connected to the electrode assembly, wherein the insulating cap is formed in a direction parallel to a direction in which the electrode lead extends.

The fin body may be formed of an aluminum metal, and the insulating cap may be formed of a rubber material.

In another aspect of the present disclosure, there is provided a battery pack including at least one battery module according to the above embodiments.

In another aspect of the present disclosure, there is provided a vehicle including at least one battery pack according to the above embodiments.

### Advantageous Effects

According to the present disclosure, insulation performance of a battery module may be ensured.

In particular, according to the present disclosure, even when a cooling fin comes into contact with an inner surface of a module housing due to swelling caused by abnormality of a battery cell or external impact, a failure of the battery module may be prevented through an insulating cap capable of preventing direct contact with the module housing.

Therefore, according to the present disclosure, a battery module having improved insulation performance, and a battery pack and a vehicle including the battery module may be provided.

The present disclosure may have various other effects, which will be described in each embodiment or the description of effects which may be easily inferred by one of ordinary skill in the art will be omitted.

### BRIEF DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery module, according to an embodiment of the present disclosure.
FIG. 2 is a view for describing a battery cell of the battery module of FIG. 1.
FIG. 3 is a view for describing a cooling fin of the battery module of FIG. 1.
FIG. 4 is a cross-sectional view illustrating the cooling fin of FIG. 3.
FIG. 5 is a view for describing a cooling fin, according to another embodiment of the present disclosure.
FIG. 6 is an enlarged view illustrating an end portion of FIG. 5.
FIGS. 7 and 8 are views for describing a short circuit preventing mechanism through an insulating cap of a cooling fin in the battery module of FIG. 1.
FIG. 9 is a view for describing a battery pack including the battery module of FIG. 1.
FIG. 10 is a view for describing a vehicle including the battery pack of FIG. 9.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

In addition, in order to help the understanding of the present disclosure, the accompanying drawings are not drawn to scale, but dimensions of some components may be exaggerated.

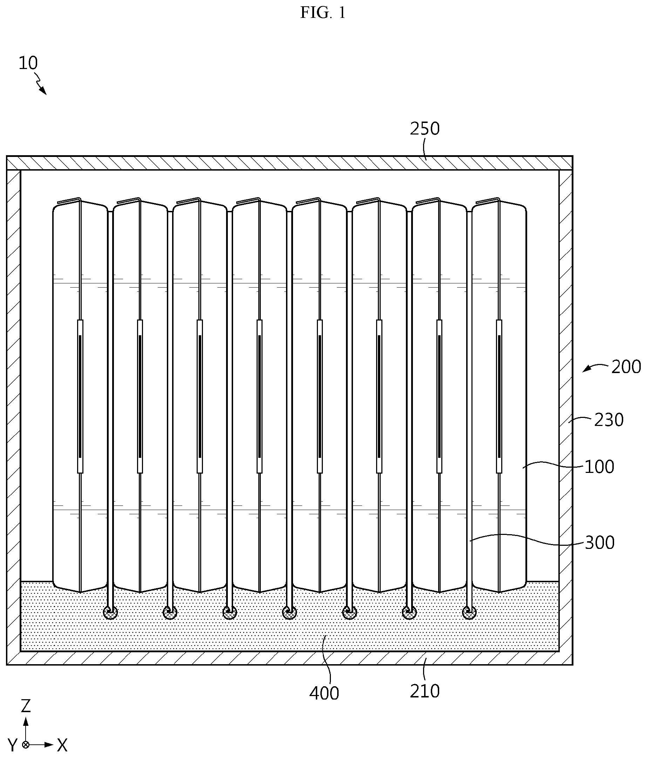

FIG. 1 is a view for describing a battery module, according to an embodiment of the present disclosure.

Referring to FIG. 1, a battery module 10 according to the present disclosure includes a plurality of battery cells 100, a module housing 200, and a cooling fin 300.

The plurality of battery cells 100 are be accommodated in the module housing 200. The plurality of battery cells 100 may be stacked to be electrically connected to each other in the module housing 200.

Each of the plurality of battery cells 100 will be described in more detail.

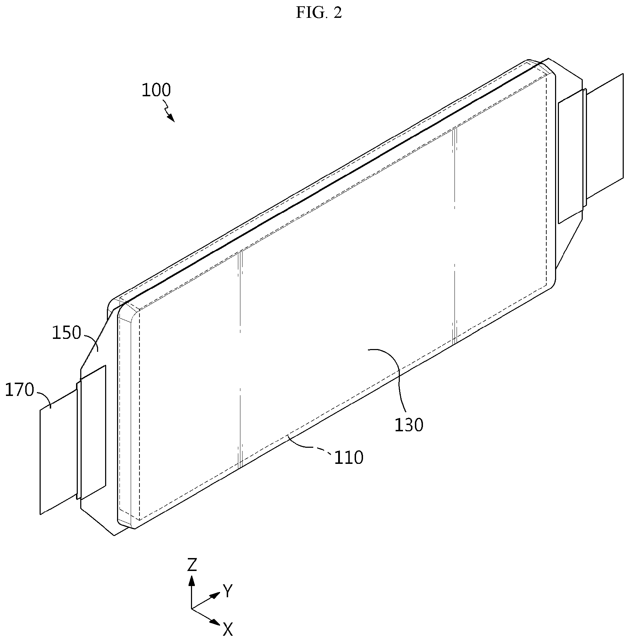

FIG. 2 is a view for describing a battery cell of the battery module of FIG. 1.

Referring to FIG. 2, the battery cell 100 may be a secondary battery, for example, a pouch-type battery cell 100. However, a type of the battery cell 100 is not limited thereto. For example, another type of battery cell 100 such as a cylindrical cell or prismatic cell may also be employed in the battery module 10 of the present disclosure.

The following will be described assuming that the battery cell 100 is a pouch-type cell as shown in FIG. 2. Referring to FIG. 2, the battery cell 100 may include an electrode assembly 110, a receiving portion 130 in which the electrode assembly 110 is accommodated, a sealing portion 150 formed around the receiving portion 130, and a pair of electrode leads 170 connected to the electrode assembly 110 and drawn out to the outside of the sealing portion 150.

The pair of electrode leads 170 may be coupled to electrode tabs (not shown) provided in the electrode assembly 110, and may be drawn out to the outside of the sealing portion 150 through the sealing portion 150. The pair of electrode leads 170 may extend in a longitudinal direction (Y axis direction) of the battery cell 100. The pair of electrode leads 170 may be drawn out in the same direction or opposite directions.

Referring back to FIG. 1, the module housing 200 has an inner space in which the plurality of battery cells 100 are accommodated. For example, the module housing 200 may include a base plate 210, a side plate 230, and a cover plate 250. The plates may be coupled to each other by using a fastening method such as bolts or welding, or may be integrally manufactured. The module housing 200 may be formed of a material such as high-strength plastic, or may be formed of a metal material.

The plurality of battery cells 100 may be accommodated in the module housing 200. The plurality of battery cells 100 may be vertically arranged on the base plate 210 so that portions of the sealing portion 150 parallel to the longitudinal direction (Y axis direction) of the battery cell 100 are located at an upper end and a lower end of the battery module 10. A plurality of battery cells 100 may be arranged in a thickness direction (X axis direction) of the battery cell 100.

At least one cooling fins 300 for cooling the plurality of battery cells 100 is provided, to be located between the plurality of battery cells 100 in the module housing 200. The present embodiment will be described assuming that a plurality of cooling fins 300 are provided.

The battery module 10 according to an embodiment of the present disclosure may have a structure in which the battery cell 100 and the cooling fin 300 are alternately arranged. The cooling fin 300 includes an insulating cap 330 for preventing direct contact with the module housing 200. The insulating cap 330 will be described below in more detail.

The cooling fin 300 according to the present disclosure will be described in more detail.

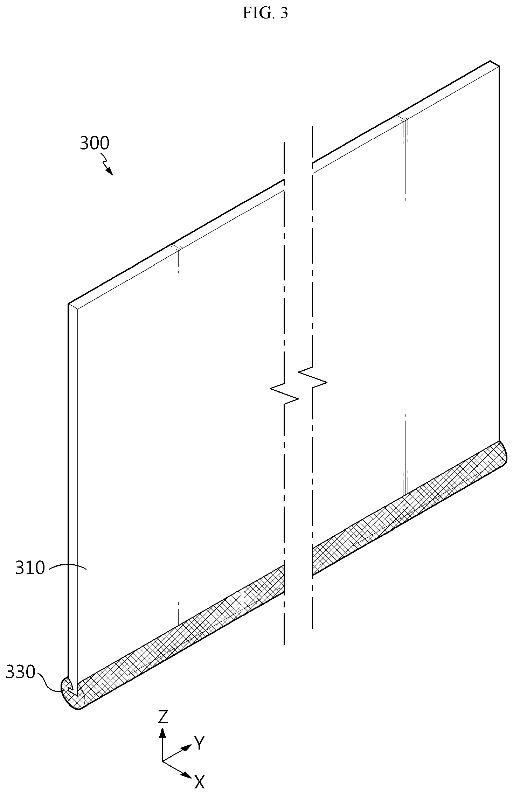

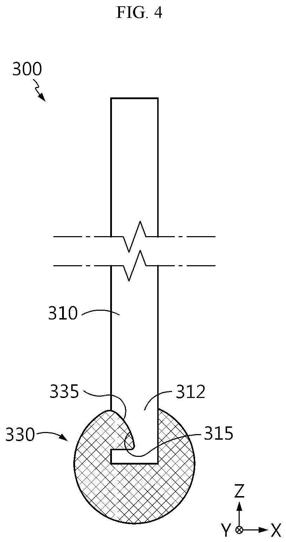

FIG. 3 is a view for describing a cooling fin of the battery module of FIG. 1. FIG. 4 is a cross-sectional view illustrating the cooling fin of FIG. 3.

Referring to FIGS. 3 and 4, the cooling fin 300 may include a fin body 310 and the insulating cap 330.

The fin body 310 may be formed of a metal material with high thermal conductivity to smoothly cool the battery cell 100. For example, the fin body 310 may be formed of a metal including aluminum, or may be formed of a metal including copper.

The fin body 310 may surface-contact adjacent battery cells 100 between the plurality of battery cells 100. Accordingly, a widest surface of the battery cell 100 and the fin body 310 may surface-contact each other, and thus, cooling efficiency of the battery cell 100 may be further maximized.

At least an end portion 312 of the fin body 310 protrudes more toward an inner surface 215 of the module housing 200 than the plurality of battery cells 100. The protruding end portion 312 of the fin body 310 may contact a heat sink (not shown), and may transfer heat received from the battery cell 100 to the heat sink through the end portion 312 of the fin body 310. Although not shown, the heat sink may transfer heat received from the fin body 310 to separate cooling water or air.

Due to a structure of the battery module 10 in which the at least an end portion 312 of the fin body 310 protrudes more toward the inner surface 215 of the module housing 200 than the plurality of battery cells 100, heat of the fin body 310 can be more easily transferred to the outside of the battery module 10, thereby improving cooling efficiency of the battery cell 100.

A coupling end 315 having a loop shape may be provided on the at least an end portion 312 of the fin body 310. That is, the coupling end 315 provided on the at least an end portion 312 of the fin body 310 may have, for example, a loop shape. The at least an end portion 312 of the fin body 310 may be coupled to the insulating cap 330, through the coupling end 315 having a loop shape.

The insulating cap 330 may prevent direct contact between the cooling fin 300 and the module housing 200.

For example, when the battery cell 100 of the present disclosure is a pouch-type cell, the insulating cap 330 may be formed in a direction (Y axis direction) parallel to a direction in which the electrode lead 170 extends.

Referring to FIG. 4, the insulating cap 330 may be coupled to the at least an end portion 312 of the fin body 310. In detail, the insulating cap 330 may have a structure surrounding the at least an end portion 312 of the fin body 310. When the cooling fin 300 contacts the module housing 200 due to swelling and/or external impact of the battery cell 100 or even is slightly bent by strong contact with the module housing 200, through the structure of the insulating cap 330, direct contact between the cooling fin 300 and the module housing 200 may be prevented.

A coupling hook 335 having a shape complementary to the loop shape of the coupling end 315 may be provided on the insulating cap 330 to facilitate coupling with the coupling end 315. That is, the coupling hook 335 of the insulating cap 330 may be engaged with the coupling end 315 provided on the end portion 312 of the fin body 310.

As such, the fin body 310 and the insulating cap 330 may be firmly coupled to each other only in a simple structure. Accordingly, even when the cooling fin 300 collides with the module housing 200 due to swelling of the battery cell 100 and/or external impact, coupling between the fin body 310 and the insulating cap 330 may be maintained. However, a method of coupling the fin body 310 to the insulating cap 330 is not limited to the above coupling method, and may be any method as long as the fin body 310 and the insulating cap 330 may be firmly and easily coupled to each other.

The insulating cap 330 may be formed of an insulating material. For example, the insulating cap 330 may be formed of a rubber material. However, the present disclosure is not limited thereto, and the insulating cap 330 may be formed of a material such as silicone or plastic or other insulating materials.

The insulating cap 330 may be spaced apart from an inner surface of the module housing 200 by a certain distance, and may be located closer to the inner surface of the module housing 200 than the plurality of battery cells 100. For example, referring to FIG. 1, the insulating cap 330 may be spaced apart from an inner surface 215 of the base plate 210 of the module housing 200 by a certain distance, and may be located closer to the inner surface 215 of the base plate 210 of the module housing 200 than the plurality of battery cells 100. That is, the insulating cap 330 may be located closer to the base plate 210 of the module housing 200, than the fin body 310 and the battery cell 100. Due to this structure, the fin body 310 or the battery cell 100 may be prevented from directly contacting the module housing 200.

However, the present disclosure may not be limited to the structure of FIGS. 3 and 4, and any structure is possible as long as the insulating cap 330 is located to prevent direct contact between the fin body 310 and the module housing 200.

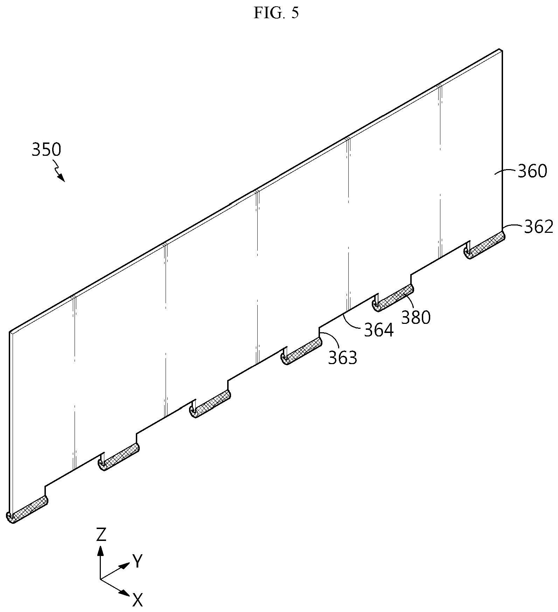

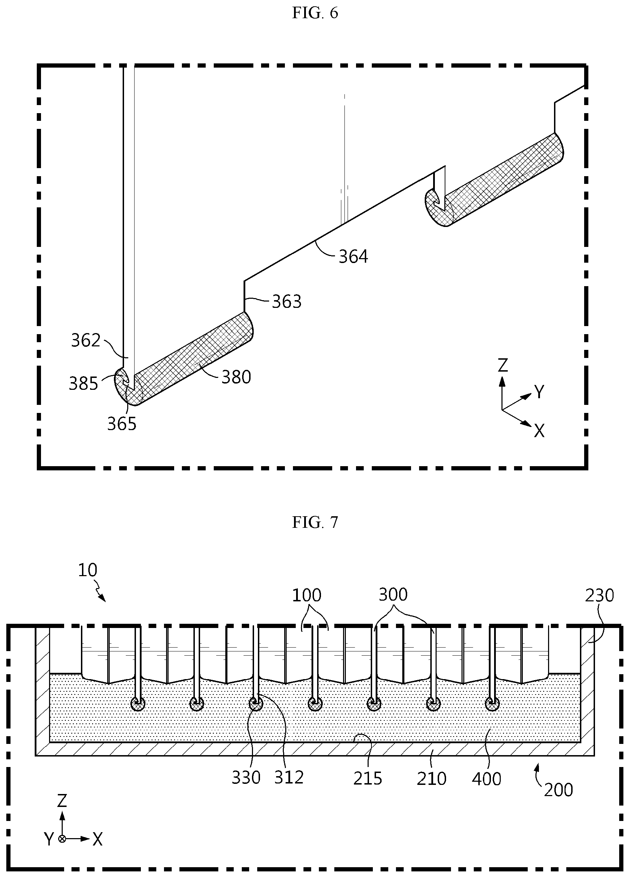

FIG. 5 is a view for describing a cooling fin, according to another embodiment of the present disclosure. FIG. 6 is an enlarged view illustrating an end portion of FIG. 5.

Referring to FIGS. 5 and 6, at least an end portion 362 of a fin body 360 of a cooling fin 350 according to another embodiment of the present disclosure may have an uneven shape in which at least one convex portion 363 and at least one concave portion 364 are alternately arranged in a direction parallel to the longitudinal direction (Y axis direction) of each battery cell 100. An insulating cap 380 may be coupled to the at least one convex portion 363.

Because the fin body 360 according to the embodiment has the uneven structure, a material of the fin body 360 required to manufacture the fin body 360 and the insulating cap 380 may be minimized, thereby reducing manufacturing costs.

Also, according to the above embodiment, because a contact area between the cooling fin 350 and an inner surface of the module housing 200 is minimized, the risk of a short circuit between the cooling fin 350 and the module housing 200 may be minimized.

Even in this case, the insulating cap 380 may have a structure surrounding the at least an end portion 362 of the fin body 360. Also, a coupling end 365 having a loop shape may be provided on the at least an end portion 362 of the fin body 360. The insulating cap 380 including a coupling hook 385 having a shape complementary to the loop shape of the coupling end 365 may be coupled to the coupling end 365.

The battery module 10 may further include a heat dissipating resin 400. The heat dissipating resin 400 may be, for example, a thermally conductive adhesive with high thermal conductivity.

Referring back to FIG. 1, the heat dissipating resin 400 may be coated to a certain height on the inner surface 215 of the base plate 210 of the module housing 200. The heat dissipating resin 400 may be provided in the module housing 200, and may contact the at least one cooling fin 300. In detail, the insulating cap 330 may be inserted into the heat dissipating resin 400. Furthermore, at least a part of the fin body 310 may be inserted into the heat dissipating resin 400.

As such, because at least a part of the cooling fin 300 is inserted into the heat dissipating resin 400, the cooling fin 300 may be more stably inserted and fixed to the heat dissipating resin 400. Accordingly, in the present embodiment, a fixing force of the cooling fin 300 may be improved without a separate additional fixing member through the heat dissipating resin 400. Also, due to the at least part of the fin body 310 inserted into the heat dissipating resin 400, heat transferred from the battery cell 100 may be easily transferred to the heat dissipating resin 400.

According to an embodiment of the present disclosure, at least a part of each of the plurality of battery cells 100 may be inserted into the heat dissipating resin 400. In this case, the battery cell 100 may directly contact the heat dissipating resin 400. Accordingly, because heat generated in the battery cell 100 may be directly transferred to the heat dissipating resin 400 without passing through the cooling fin 300, cooling efficiency of the battery cell 100 may be further improved. Also, because the battery cell 100 may be inserted and fixed to the heat dissipating resin 400, a fixing force of the battery cell 100 may be improved without a separate additional fixing member.

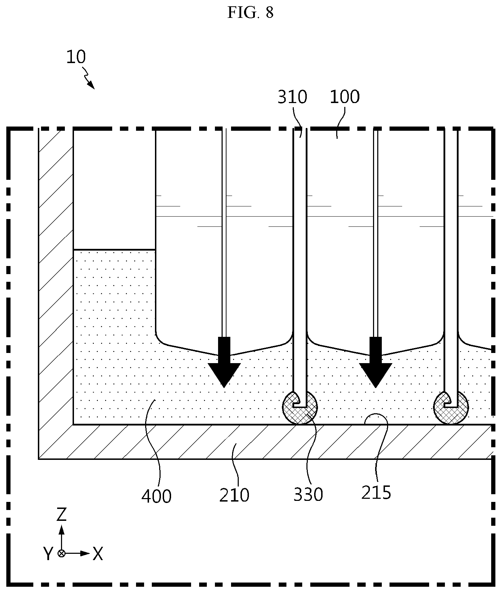

FIGS. 7 and 8 are views for describing a short circuit preventing mechanism through an insulating cap of a cooling fin in the battery module of FIG. 1.

Referring to FIG. 7, the heat dissipating resin 400 is coated to a certain height on the inner surface 215 of the base plate 210 of the module housing 200 according to an embodiment of the present disclosure, and a plurality of battery cells 100 and a plurality of cooling fins 300 are vertically alternately arranged on the heat dissipating resin 400. The insulating cap 330 coupled to the end portion 312 of the fin body 310 may be spaced apart from the inner surface 215 of the base plate 210 of the module housing 200 by a certain distance, and may be located closer to the inner surface 215 of the base plate 210 of the module housing 200 than the plurality of battery cells 100.

In this case, as shown in FIG. 8, external impact may be applied to the cover plate 250 in a direction (-Z axis direction) perpendicular to the cover plate 250 of the module housing 200. In this case, the plurality of battery cells 100 and the plurality of cooling fins 300 accommodated in the module housing 200 may receive a force in a width direction (-Z axis direction) of the battery cell 100 and may be moved in the width direction (-Z axis direction) of the battery cell 100. In this case, the insulating cap 330 spaced apart from the inner surface 215 of the base plate 210 of the module housing 200 by a certain distance may first come into contact with the inner surface 215 of the base plate 210. Even when each plate of the module housing 200 including the base plate 210 is formed of a metal material, due to the insulating cap 330, direct contact between the fin body 310 formed of a metal material and the base plate 210 formed of a metal material may be prevented, thereby preventing damage to the battery module 10 due to a short circuit.

The same applies when external impact is applied in a direction (+Z axis direction) perpendicular to the base plate 210 to the base plate 210. Alternatively, the same applies when the cooling fin 300 comes into contact with the module housing 200 due to abnormality such as swelling of the battery cell 100.

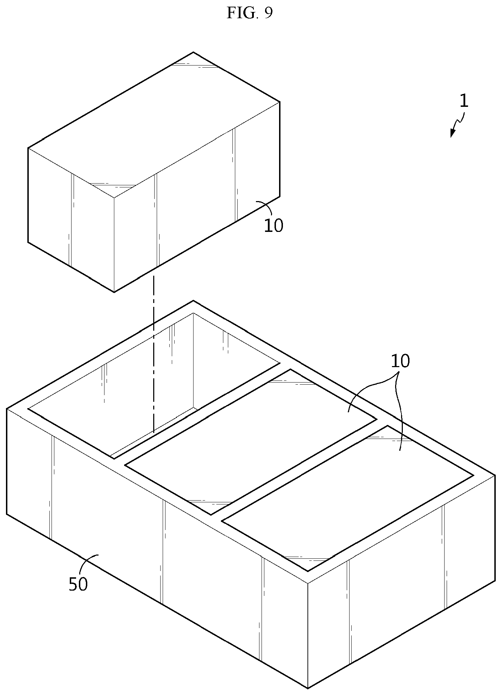

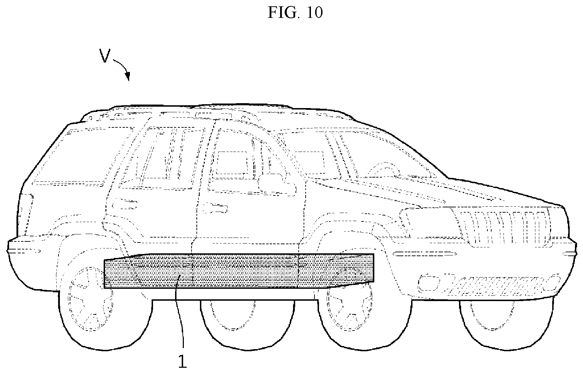

FIG. 9 is a view for describing a battery pack including the battery module of FIG. 1. FIG. 10 is a view for describing a vehicle including the battery pack of FIG. 9.

Referring to FIG. 9, a battery pack 1 according to the present disclosure may include at least one battery module 10 according to the present disclosure. Also, the battery pack 1 according to the present disclosure may include a pack case 50 in which the at least one battery module 10 may be accommodated. In addition, various elements, for example, a battery management system (BMS), a pack case, a relay, and a current sensor, which are known at the time of filling the present disclosure, in addition to the battery module 10 may be further included in the battery pack 1.

Referring to FIG. 10, a vehicle V according to the present disclosure may include at least one battery pack 1 according to the present disclosure.

According to the above various embodiments, even when the cooling fin 300 comes into contact with the inner surface 215 of the module housing 200 due to swelling caused by abnormality of the battery cell 100 or external impact, a failure of the battery module 10 may be prevented through the insulating cap 330 capable of preventing direct contact with the module housing 200.

Accordingly, according to the above various embodiments, the battery module 10 having improved insulation performance, and the battery pack 1 and the vehicle V including the battery module 10 may be provided.

It will be understood by one of ordinary skill in the art that when terms indicating directions such as upper and lower are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

## Claims

1. A battery module (10) comprising:
a plurality of battery cells (100);
a module housing (200) in which the plurality of battery cells are accommodated; and
at least one cooling fin (300) located between the plurality of battery cells in the module housing and comprising an insulating cap (330) for preventing direct contact with the module housing, wherein each of the at least one cooling fin (300) comprises a fin body (310) surface-contacting adjacent battery cells (100) between the plurality of battery cells,
wherein the insulating cap (330) is coupled to at least an end portion of the fin body,
wherein the at least an end portion of the fin body (310) protrudes more toward an inner surface of the module housing (200) than the plurality of battery cells (100), and
wherein the insulating cap (330) is located closer to the inner surface of the module housing than the plurality of battery cells (100),
**characterized in that** the insulating cap (330) is spaced apart from the inner surface of the module housing (200) by a certain distance.

2. The battery module according to claim 1, wherein the insulating cap (330) surrounds the at least an end portion of the fin body (310).

3. The battery module according to claim 1, wherein a coupling end (315) having a loop shape is provided on the at least an end portion of the fin body (310), and a coupling hook (335) having a shape complementary to the loop shape of the coupling end is provided on the insulating cap.

4. The battery module according to claim 1, further comprising a heat dissipating resin (400) provided in the module housing and contacting the at least one cooling fin (300),
wherein the insulating cap (330) is inserted into the heat dissipating resin.

5. The battery module according to claim 4, wherein the heat dissipating resin (400) is coated to a certain height on an inner surface of the module housing200).

6. The battery module according to claim 4, wherein at least a part of each of the plurality of battery cells (100) is inserted into the heat dissipating resin (400).

7. The battery module according to claim 1, wherein the at least an end portion of the fin body (310) has an uneven shape in which at least one convex portion and at least one concave portion are alternately arranged in a direction parallel to a longitudinal direction of each of the plurality of battery cells (100),
wherein the insulating cap (330) is coupled to the at least one convex portion.

8. The battery module according to claim 1, wherein the plurality of battery cells (100) are pouch-type cells, and each comprise a receiving portion in which an electrode assembly (110) is accommodated, a sealing portion (150) formed around the receiving portion, and an electrode lead (170) extending to outside of the sealing portion and connected to the electrode assembly (110),
wherein the insulating cap (330) is formed in a direction parallel to a direction in which the electrode lead (170) extends.

9. The battery module according to claim 1, wherein the fin body 310) is formed of an aluminum metal, and the insulating cap (330) is formed of a rubber material.

10. A battery pack comprising at least one battery module according to any one of claims 1 to 9.

11. A vehicle comprising at least one battery pack according to claim 10.

## Patentansprüche

1. Batteriemodul (10), umfassend:
eine Mehrzahl von Batteriezellen (100);
ein Modulgehäuse (200), in welchem die Mehrzahl von Batteriezellen aufgenommen ist; und
wenigstens eine Kühlrippe (300), welche zwischen der Mehrzahl von Batteriezellen in dem Modulgehäuse angeordnet ist und eine Isolierkappe (330) zum Verhindern eines direkten Kontakts mit dem Modulgehäuse umfasst, wobei jede der wenigstens einen Kühlrippe (300) einen Rippenkörper (310) umfasst, welcher benachbarte Batteriezellen (100) zwischen der Mehrzahl von Batteriezellen flächenmäßig kontaktiert,
wobei die Isolierkappe (330) mit wenigstens einem Endabschnitt des Rippenkörpers gekoppelt ist,
wobei der wenigstens eine Endabschnitt des Rippenkörpers (310) mehr in Richtung einer inneren Fläche des Modulgehäuses (200) vorsteht als die Mehrzahl von Batteriezellen (100) und
wobei die Isolierkappe (330) näher an der inneren Fläche des Modulgehäuses angeordnet ist als die Mehrzahl von Batteriezellen (100),
**dadurch gekennzeichnet, dass** die Isolierkappe (330) um einen bestimmten Abstand von der inneren Fläche des Modulgehäuses (200) beabstandet ist.

2. Batteriemodul nach Anspruch 1, wobei die Isolierkappe (330) den wenigstens einen Endabschnitt des Rippenkörpers (310) umgibt.

3. Batteriemodul nach Anspruch 1, wobei ein Kopplungsende (315), welches eine Schlaufenform aufweist, an dem wenigstens einen Endabschnitt des Rippenkörpers (310) bereitgestellt ist und ein Kopplungshaken (335), welcher eine zu der Schlaufenform des Kopplungsendes komplementäre Form aufweist, an der Isolierkappe bereitgestellt ist.

4. Batteriemodul nach Anspruch 1, ferner umfassend ein wärmeableitendes Harz (400), welches in dem Modulgehäuse bereitgestellt ist und die wenigstens eine Kühlrippe (300) kontaktiert,
wobei die Isolierkappe (330) in das wärmeableitende Harz eingesetzt ist.

5. Batteriemodul nach Anspruch 4, wobei das wärmeableitende Harz (400) bis zu einer bestimmten Höhe auf eine innere Fläche des Modulgehäuses (200) aufgebracht ist.

6. Batteriemodul nach Anspruch 4, wobei wenigstens ein Teil jeder der Mehrzahl von Batteriezellen (100) in das wärmeableitende Harz (400) eingesetzt ist.

7. Batteriemodul nach Anspruch 1, wobei der wenigstens eine Endabschnitt des Rippenkörpers (310) eine unebene Form aufweist, in welcher wenigstens ein konvexer Abschnitt und wenigstens ein konkaver Abschnitt in einer Richtung abwechselnd angeordnet sind, welche parallel zu einer longitudinalen Richtung jeder der Mehrzahl von Batteriezellen (100) ist,
wobei die Isolierkappe (330) mit dem wenigstens einen konvexen Abschnitt gekoppelt ist.

8. Batteriemodul nach Anspruch 1, wobei die Mehrzahl von Batteriezellen (100) Beuteltypzellen sind und jeweils einen Aufnahmeabschnitt, in welchem eine Elektrodenanordnung (110) aufgenommen ist, einen Dichtabschnitt (150), welcher um den Aufnahmeabschnitt herum gebildet ist, und eine Elektrodenleitung (170) umfassen, welche sich zu dem Äußeren des Dichtabschnitts erstreckt und mit der Elektrodenanordnung (110) verbunden ist,
wobei die Isolierkappe (330) in einer Richtung gebildet ist, welche parallel zu einer Richtung ist, in welcher sich die Elektrodenleitung (170) erstreckt.

9. Batteriemodul nach Anspruch 1, wobei der Rippenkörper (310) aus einem Aluminiummetall gebildet ist und die Isolierkappe (330) aus einem Gummimaterial gebildet ist.

10. Batteriepack, umfassend wenigstens ein Batteriemodul nach einem der Ansprüche 1 bis 9.

11. Fahrzeug, umfassend wenigstens einen Batteriepack nach Anspruch 10.

## Revendications

1. Module de batterie (10) comprenant :
une pluralité de cellules de batterie (100) ;
un boîtier de module (200) dans lequel la pluralité de cellules de batterie sont logées ; et
au moins une ailette de refroidissement (300) située entre la pluralité de cellules de batterie dans le boîtier de module et comprenant un capuchon isolant (330) pour empêcher un contact direct avec le boîtier de module, dans lequel chacune de l'au moins une ailette de refroidissement (300) comprend un corps d'ailette (310) en contact de surface avec des cellules de batterie (100) adjacentes entre la pluralité de cellules de batterie,
dans lequel le capuchon isolant (330) est couplé à au moins une partie d'extrémité du corps d'ailette,
dans lequel l'au moins une partie d'extrémité du corps d'ailette (310) fait plus saillie vers une surface intérieure du boîtier de module (200) que la pluralité de cellules de batterie (100), et
dans lequel le capuchon isolant (330) est situé plus près de la surface intérieure du boîtier de module que la pluralité de cellules de batterie (100),
**caractérisé en ce que** le capuchon isolant (330) est séparé de la surface intérieure du boîtier de module (200) d'une certaine distance.

2. Module de batterie selon la revendication 1, dans lequel le capuchon isolant (330) entoure l'au moins une partie d'extrémité du corps d'ailette (310).

3. Module de batterie selon la revendication 1, dans lequel une extrémité d'accouplement (315) ayant une forme de boucle est prévue sur l'au moins une partie d'extrémité du corps d'ailette (310), et un crochet d'accouplement (335) ayant une forme complémentaire à la forme de boucle de l'extrémité d'accouplement est prévu sur le capuchon isolant.

4. Module de batterie selon la revendication 1, comprenant en outre une résine dissipatrice de chaleur (400) prévue dans le boîtier de module et en contact avec l'au moins une ailette de refroidissement (300),
dans lequel le capuchon isolant (330) est inséré dans la résine dissipatrice de chaleur.

5. Module de batterie selon la revendication 4, dans lequel la résine dissipatrice de chaleur (400) est appliquée jusqu'à une certaine hauteur sur une surface intérieure du boîtier de module (200).

6. Module de batterie selon la revendication 4, dans lequel au moins une partie de chacune de la pluralité de cellules de batterie (100) est insérée dans la résine dissipatrice de chaleur (400).

7. Module de batterie selon la revendication 1, dans lequel l'au moins une partie d'extrémité du corps d'ailette (310) a une forme irrégulière dans laquelle au moins une partie convexe et au moins une partie concave sont agencées alternativement dans une direction parallèle à une direction longitudinale de chacune de la pluralité de cellules de batterie (100),
dans lequel le capuchon isolant (330) est couplé à l'au moins une partie convexe.

8. Module de batterie selon la revendication 1, dans lequel la pluralité de cellules de batterie (100) sont des cellules de type poche, et chacune comprend une partie réceptrice dans laquelle un ensemble électrode (110) est logé, une partie de scellage (150) formée autour de la partie réceptrice, et une tige d'électrode (170) s'étendant vers l'extérieur de la partie de scellage et connectée à l'ensemble électrode (110),
dans lequel le capuchon isolant (330) est formé dans une direction parallèle à une direction dans laquelle la tige d'électrode (170) s'étend.

9. Module de batterie selon la revendication 1, dans lequel le corps d'ailette (310) est constitué d'un métal aluminium, et le capuchon isolant (330) est constitué d'un matériau caoutchouc.

10. Bloc-batterie comprenant au moins un module de batterie selon l'une quelconque des revendications 1 à 9.

11. Véhicule comprenant au moins un bloc-batterie selon la revendication 10.
